(19) **Europäisches Patentamt / European Patent Office / Office européen des brevets**

(11) **EP 3 508 372 B1**

(12) **FASCICULE DE BREVET EUROPEEN**

(45) Date de publication et mention de la délivrance du brevet:
**27.01.2021 Bulletin 2021/04**

(21) Numéro de dépôt: **19150584.1**

(22) Date de dépôt: **07.01.2019**

(51) Int Cl.:
*B60L 53/00* (2019.01)     *G06Q 10/02* (2012.01)
*G06Q 10/06* (2012.01)     *G06Q 50/06* (2012.01)
*H02J 7/00* (2006.01)     *H02J 7/04* (2006.01)
*G06Q 10/08* (2012.01)     *H01M 10/44* (2006.01)
*B60L 53/80* (2019.01)     *B60L 53/10* (2019.01)
*B60L 58/14* (2019.01)     *B60L 58/12* (2019.01)
*B60L 58/13* (2019.01)

(54) **PROCÉDÉ ET SYSTÈME DE GESTION DE LA CHARGE DE BATTERIES D'UNE PLURALITÉ D'APPAREILS**

VERFAHREN UND SYSTEM ZUR VERWALTUNG DER LADUNG VON BATTERIEN EINER VIELZAHL VON GERÄTEN

METHOD AND SYSTEM FOR MANAGING THE BATTERY CHARGING OF A PLURALITY OF DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2018 FR 1800023**
**08.01.2018 CA 2991194**

(43) Date de publication de la demande:
**10.07.2019 Bulletin 2019/28**

(73) Titulaires:
• **Powerup**
  **93600 Aulnay Sous Bois (FR)**
• **Commissariat à l'Energie Atomique et aux Energies**
  **Alternatives**
  **75015 Paris (FR)**

(72) Inventeurs:
• **PRIOUR, Josselin**
  **93600 AULNAY SOUS BOIS (FR)**
• **DELAILLE, Arnaud**
  **93600 AULNAY SOUS BOIS (FR)**
• **DELAILLE, Benjamin**
  **93600 AULNAY SOUS BOIS (FR)**

(74) Mandataire: **Cabinet Camus Lebkiri**
**25 rue de Maubeuge**
**75009 Paris (FR)**

(56) Documents cités:
**EP-A1- 3 249 774      WO-A2-2013/016562**
**WO-A2-2013/016564      FR-A1- 2 780 569**
**US-A1- 2004 066 171**

**Description**

**DOMAINE DE L'INVENTION**

L'invention concerne la gestion de la charge d'une pluralité de batteries d'appareils autonomes afin d'une part de limiter le vieillissement des batteries, et d'autre part d'augmenter le taux d'utilisation des appareils autonomes.

**ART ANTÉRIEUR**

Des appareils autonomes peuvent être alimentés sur batteries comme, à titre d'exemples non limitatifs, des véhicules électriques, des vélos à assistance électrique, des scooters électriques, des lampes, des outillages électroportatifs, des détecteurs. Il est connu que la charge des batteries impacte leur durée de vie. En particulier, la charge rapide à hauts états de charge et/ou à froid accélère le vieillissement des batteries, notamment du type lithium-ion, et par voie de conséquence leur perte d'autonomie au cours du temps. Il est également connu que les conditions de stockage des batteries impactent leur durée de vie. En particulier, le stockage à haute température et/ou hauts états de charge accélère également le vieillissement des batteries, notamment de type lithium-ion.

De ce fait, de nombreuses stratégies de gestion de la charge et/ou des conditions de stockage des batteries sont développées de manière à éviter le vieillissement prématuré des batteries. Un exemple est donné dans le brevet US 2004/0066171 A1, dans lequel il est proposé d'anticiper le besoin à venir d'un ordinateur portable alimenté sur batterie de manière à ce que l'ordinateur soit pleinement rechargé lorsque celui-ci doit être utilisé ultérieurement en mode autonome sans accès à une alimentation sur secteur, et maintenu à des états de charge inférieurs lorsqu'il est prévu des utilisations autonomes de faible durée ou avec une connexion permanente au secteur. La gestion de la charge est effectuée à partir d'un emploi du temps de l'utilisateur de l'appareil, pour prédire le mode de charge des batteries de l'ordinateur.

Ce procédé de charge ne concerne l'utilisation que d'un seul appareil et ne permet pas d'optimisation pour une flotte d'appareils.

Il est connu par ailleurs que des batteries utilisées de manière individuelle pour alimenter un appareil autonome peuvent être utilisées de manière individuelle ou collective pour alimenter un second usage. Par exemple, il a été proposé l'utilisation de batteries de véhicules électriques pour alimenter la consommation d'une maison (application dite V2H pour Vehicule to Home) ou l'utilisation d'une flotte de batteries de véhicules électriques pour supporter le réseau électrique (application dite V2G pour Vehicule to Grid). Une mise en réseau des batteries de l'ensemble ou d'un sous-ensemble des batteries des appareils autonomes peut alimenter, à titre d'exemples non limitatifs, des panneaux à messages variables, des lampadaires, des parcmètres, ou du stockage d'énergie intermittente.

Il est également utile de prévoir dans ce cas une gestion des charges et décharges permettant d'optimiser la durée de vie des batteries.

**OBJECTIFS DE L'INVENTION**

Pour résoudre ces problèmes, l'invention vise à fournir un procédé et un système de gestion de la charge de batteries d'une pluralité d'appareils permettant de limiter le vieillissement global des batteries. C'est également un objectif de fournir un procédé et un système pour alimenter un ou plusieurs consommateurs secondaires.

**DESCRIPTION DE L'INVENTION**

Avec ces objectifs en vue, l'invention a pour objet un procédé de gestion de la charge de batteries d'une pluralité d'appareils, selon la revendication 1.

L'invention s'applique à des appareils qui utilisent des batteries incorporées, auquel cas la charge de la batterie s'effectue directement sur l'appareil, ou avec des batteries amovibles, auquel cas la charge de la batterie peut s'effectuer avec la batterie séparée de l'appareil. De plus, lorsque la batterie est amovible, on peut permuter les batteries entre différents appareils. Dans ce cas, on gère la batterie séparément de l'appareil.

La réservation peut être un besoin directement exprimé par un utilisateur ou un besoin prédit selon une quelconque méthode de prédiction prenant en compte la récurrence d'une utilisation d'un jour à l'autre, ou d'un jour de semaine à celui de la semaine suivante. La méthode peut prendre en compte également une saisonnalité ou des prévisions météorologiques ou des évènements corrélés à l'utilisation des appareils. La réservation inclut une indication qui permet de déterminer la quantité d'énergie qu'il est prévu d'utiliser. L'indication du besoin peut comprendre l'horaire de début d'utilisation, avantageusement l'horaire de fin d'utilisation et/ou la profondeur de décharge liée à l'utilisation, voire la température d'utilisation ou encore d'intensité (ou de puissance) d'utilisation si ces dernières données sont variables.

Grâce au procédé selon l'invention, non seulement on optimise la durée de vie de chaque batterie par la gestion de son mode de charge, mais on peut de plus optimiser la gestion de l'ensemble des batteries en ayant la possibilité de faire des arbitrages d'affectation des batteries. On pourra par exemple affecter une batterie déjà partiellement chargée à une réservation proche et réserver une batterie déchargée à une réservation plus tardive afin de disposer d'une plus longue période de charge. De cette manière, la charge des deux batteries peut s'effectuer à charge lente, ce qui limite l'impact sur leur durée de vie.

Selon un premier mode de réalisation, on définit l'objectif de charge à 100% de la capacité de la batterie. A chaque utilisation, on dispose alors du maximum d'autonomie fournie par la batterie.

Selon un deuxième mode de réalisation, on définit l'objectif de charge pour couvrir a minima le besoin d'utilisation. En fonction du besoin d'utilisation, un objectif de charge est déterminé afin de couvrir complètement l'utilisation prévue. On limite ainsi le niveau de charge au niveau du besoin, éventuellement augmenté d'une marge de sécurité, ce qui permet d'éviter d'atteindre la pleine charge, conditions dans lesquelles la durée de vie de la batterie diminuerait.

Selon un perfectionnement, pour vérifier que la batterie est apte à satisfaire le besoin d'utilisation, on prend en compte une estimation de la santé de la batterie. L'estimation de l'état de santé indique le taux de la charge nominale de la batterie que celle-ci peut stocker au maximum. En fonction du vieillissement de la batterie, ce taux diminue. Afin de déterminer si la batterie est apte à couvrir le service prévu, on utilise l'estimation de l'état de santé pour déterminer la capacité maximale de la batterie et comparer cette capacité maximale pour qu'elle soit supérieure au besoin. L'estimation de l'état de santé peut par exemple être établie à la suite d'une décharge profonde, en évaluant la charge qui est reprise au maximum après cette décharge. L'information est stockée par le système et/ou inscrite dans une mémoire de la batterie.

Selon le procédé de l'invention, on ajoute aux batteries réservées un nombre prédéterminé de batteries de réserve sans réservation et on définit un objectif de pleine charge pour les batteries de réserve. Ceci permet de faire face à des réservations tardives, voire à des utilisations de dernière minute, ou à des aléas sur la disponibilité des appareils. On décide de l'utilisation d'une batterie de réserve par exemple dès lors qu'aucune batterie ne peut être rechargée en charge lente ou rapide pour satisfaire à une réservation donnée. Le nombre de batteries de réserve peut être déterminé en fonction du degré de confiance des prévisions d'usage, paramètre pouvant être calculé de manière automatique sur la base des écarts constatés entre prévisions et réalisations.

De préférence, les batteries de réserve sont échangées périodiquement. Les batteries de réserve sont désignées de manière alternative, de manière à homogénéiser l'impact du vieillissement de l'ensemble de la pluralité de batteries.

Selon une disposition, on affecte en priorité les batteries pleinement chargées aux besoins les plus intenses. Les batteries les plus chargées sont par exemple les batteries qui étaient considérées en réserve précédemment. Leur affectation prioritaire permet de les décharger et de limiter la durée de leur maintien en pleine charge.

Selon une disposition, on affecte les batteries les plus chargées dans l'ordre des réservations les plus précoces. On réserve ainsi les batteries qui nécessitent une longue durée de charge aux usages les plus tardifs, pour limiter ainsi le besoin en charge rapide, et donc limiter le vieillissement des batteries.

Selon une disposition, pour un lot de réservations ayant le même besoin, ou pour un lot de batteries ayant le même état de santé, on affecte les batteries de manière à minimiser globalement l'écart entre la charge cible pour satisfaire une réservation et la charge initiale de la batterie.

Selon une disposition, on affecte en priorité les batteries en moins bonne santé aux besoins les plus faibles.

Selon une disposition, pour les batteries réservées, on fait coïncider l'instant d'atteinte de la charge selon l'objectif à l'instant de début de la réservation. On dispose ainsi de la plus large possibilité d'ajustement de l'intensité de charge, avec la possibilité de diminuer celle-ci, ce qui participe à la moindre usure de la batterie.

Selon une disposition, on pilote les batteries réservées afin d'atteindre l'objectif de charge desdites batteries en leur faisant fournir du courant à un consommateur. La connexion des batteries à un consommateur permet d'ajouter un degré de liberté dans la gestion du niveau de charge des batteries, en permettant la décharge des batteries dont la charge serait excédentaire, et ainsi limiter la durée de stockage avec une forte charge et donc limiter le vieillissement. Cette possibilité s'applique en particulier aux batteries qui étaient en réserve précédemment et qui sont pleinement chargées. Le pilotage peut être simplement la connexion et le déconnexion de la batterie au consommateur, ce dernier déterminant l'intensité de l'usage.

Selon un perfectionnement, pour vérifier que la batterie est apte à satisfaire le besoin d'utilisation, on prend en compte une température prédite pendant la période de la réservation. La restitution de la charge est tributaire de la température de la batterie. En particulier, lorsque la batterie est très froide, la restitution de charge est moindre. On peut anticiper ces conditions pour déterminer un objectif de charge qui tient compte de ces conditions.

Selon une disposition, pour vérifier que la batterie est apte à satisfaire le besoin d'utilisation on estime une durée de charge avec un courant de charge lente, puis on procède à une deuxième phase d'affectation d'une batterie à chaque réservation non satisfaite lors de la première phase d'affectation en estimant une durée de charge avec un courant de charge rapide supérieur au courant de charge lente. On favorise ainsi les affectations permettant une charge lente, en réservant les charges rapides uniquement aux cas qui ne peuvent pas être satisfaits autrement. On limite ainsi le vieillissement des batteries induit par les charges rapides.

L'invention a aussi pour objet un système de gestion de la charge de batteries d'une pluralité d'appareils, avec les caractéristiques techniques de la revendication 14.

Selon une disposition constructive, le système comporte des moyens d'acquisition pour enregistrer et fournir pour chaque batterie au moins l'un des paramètres parmi le courant de charge ou de décharge, la tension, la température, l'état de charge, l'état de santé. Ces moyens d'acquisition peuvent être intégrés à la batterie qui dispose alors de moyens de communication pour fournir aux moyens d'analyse du système les informations acquises. La batterie peut également disposer de moyens de stockage pour enregistrer les informations en continu lors de son utilisation et restituer ces données lorsqu'elle est connectée au système pour la charge.

Selon une disposition constructive, le système comporte au moins un consommateur et les moyens de régulation sont aptes à commander la décharge de la batterie en alimentant le consommateur. Les consommateurs peuvent être, à titre d'exemples non limitatifs, le réseau électrique, des panneaux à messages variables, des lampadaires, des parcmètres, ou du stockage d'énergie intermittente.

## BRÈVE DESCRIPTION DES FIGURES

D'autres avantages pourront encore apparaître à l'homme du métier à la lecture des exemples ci-dessous, illustrés par les figures annexées, donnés à titre illustratif, parmi lesquelles :

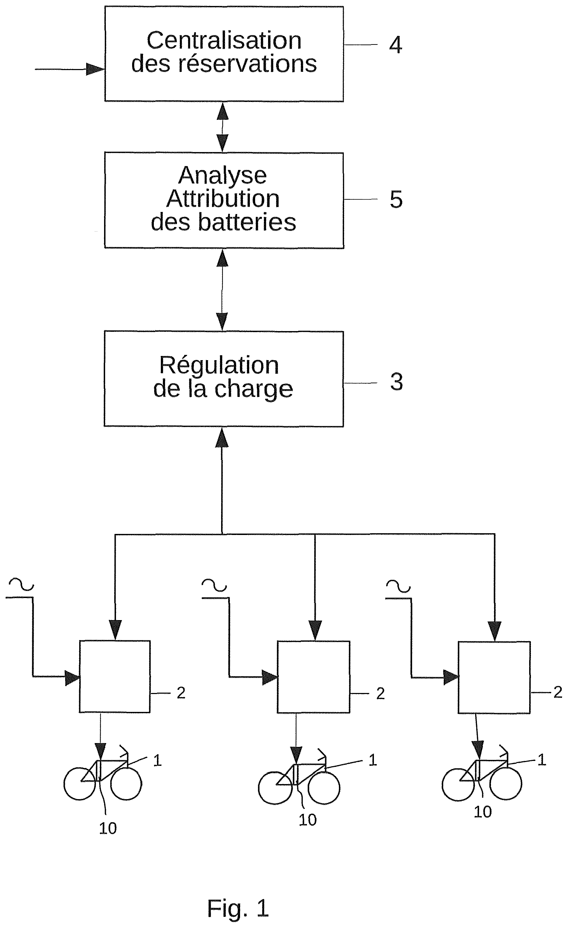

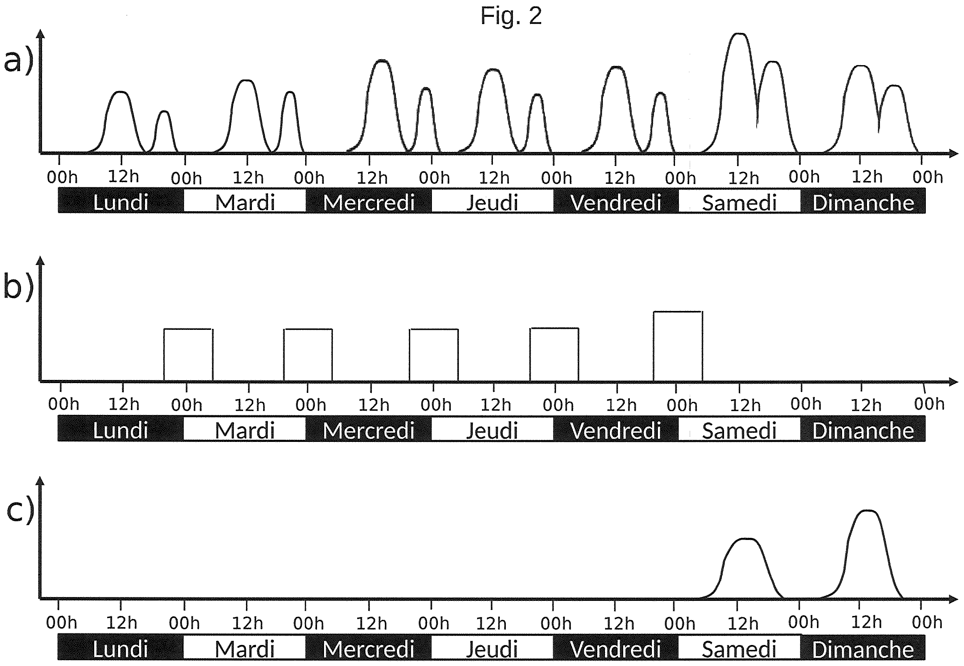

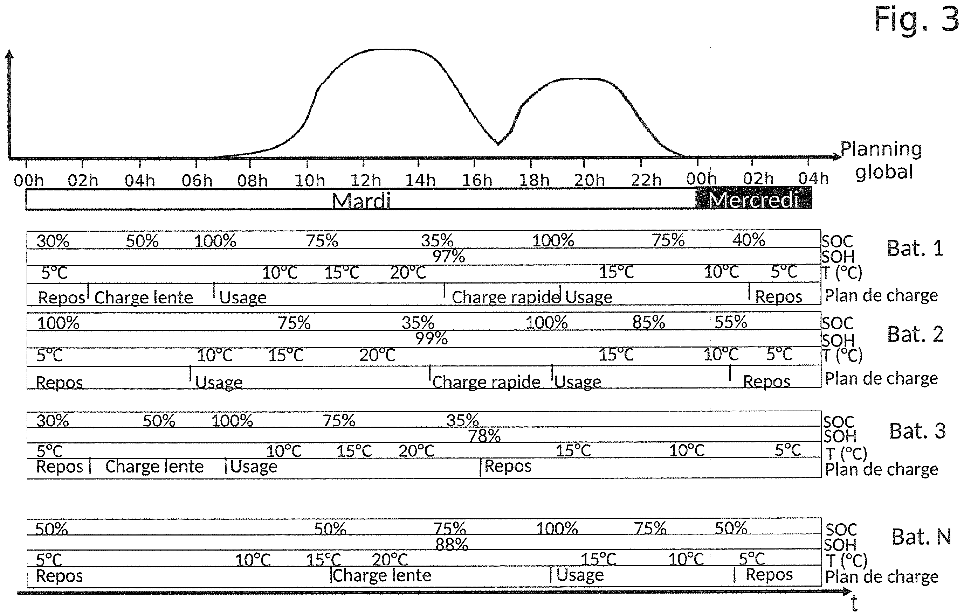

▷ la figure 1 est un représentation schématique d'un système conforme à un mode de réalisation de l'invention ;
▷ la figure 2 présente des chronogrammes illustrant le planning d'usage hebdomadaire de différents types de d'appareils autonomes;
▷ la figure 3 présente des chronogrammes illustrant l'utilisation de batteries.

## DESCRIPTION DÉTAILLÉE

Un système selon l'invention, tel que représenté sur la figure 1, comporte une pluralité d'appareils 1, ici des vélos à assistance électrique, utilisant des batteries 10 pour fournir une fonctionnalité telle qu'un éclairage, une mise en mouvement, une télécommunication ou des mesures avec enregistrement ou télétransmission. Le système comporte des moyens de charge 2 auxquels on connecte les batteries 10 soit directement, soit par l'intermédiaire des appareils 1 qu'elles alimentent. Le système comporte en outre des moyens de régulation 3 pour piloter les moyens de charge 2 de chaque batterie 10. Les moyens de charge 2 peuvent être dispersés et communiquer avec les moyens de régulation 3 directement ou par l'intermédiaire d'un réseau de communication filaire ou non filaire. Le système comporte en outre des moyens de planification 4 pour planifier une utilisation des appareils 1, et des moyens d'analyse 5 pour établir un objectif de charge pour chaque batterie. Les moyens de régulation 3 reçoivent les objectifs différenciés pour chaque batterie de la pluralité d'appareils 1 et pilotent la charge de chaque batterie en fonction de l'objectif.

La planification est réalisée à intervalle régulier, par exemple quotidiennement pour établir les objectifs de charge la veille pour l'utilisation des appareils 1 le lendemain. Cependant, l'intervalle de planification peut être plus court ou plus long.

Les moyens de planification 4 sont prévus pour recevoir par exemple des réservations pour un ou plusieurs appareils 1. Le système peut gérer une pluralité d'appareils 1 tous du même type ou de plusieurs types différents. Dans ce cas, la réservation doit préciser le type d'appareil réservé. La réservation doit également être effectuée pour un besoin d'utilisation. Celui-ci peut être exprimé directement en unité d'énergie, par exemple des watts-heures (Wh), en durée d'utilisation, en distance à parcourir, en trajet à effectuer ou tout autre méthode adaptée. Le besoin d'utilisation est converti in-fine en unité d'énergie ou en ampère-heure (Ah). La réservation peut être établie sur une période plus longue que l'intervalle de planification avec des périodes de recharge prévues sur la période de réservation. Par exemple, un chef de chantier réservera 10 lampes pour une utilisation de 8 h à 17 h du lundi au vendredi de la semaine prochaine et cinq batteries de visseuses pour le lundi et le mardi pour une utilisation de 9 h à 16 h.

Alternativement ou en complément, les moyens de planification 4 se basent sur l'usage antérieur pour établir la planification, et fonctionnent donc par apprentissage. Pour cela, le système comporte des moyens d'acquisition, non représentés, pour enregistrer et fournir pour chaque batterie au moins l'un des paramètres parmi le courant de charge ou de décharge, la tension, la température, l'état de charge sur une période passée, par exemple sur la semaine précédente. Les données collectées sont stockées par les moyens de planification 4 et permettent de connaître les périodes d'utilisation de chaque batterie 10 par le passé. En reportant ces données pour la semaine en cours, il est possible d'établir une prévision des besoins d'utilisation des appareils. La figure 2 montre des prévisions d'usage au cours d'une semaine en fonction de différents types d'appareils, en l'occurrence des scooters électriques (a), des lampes autonomes (b) et des vélos tous-terrains électriques (c).

Dans une phase de planification, les moyens de planification 4 établissent les objectifs de charge pour chaque batterie. Pour cela on retranscrit les données d'usage du lendemain, selon les réservations reçues ou la prévision faite, en matière de planning et profondeur de décharge. On collecte et analyse les données de charge et de santé de la pluralité de batteries 10. Les moyens de planification 4 mettent alors en adéquation les batteries disponibles d'une part et les demandes d'autre part, en veillant à limiter le vieillissement et augmenter le service rendu. On affecte lors d'une première phase d'affectation une batterie à chaque réservation en vérifiant que la batterie ainsi réservée est apte à satisfaire le besoin d'utilisation en prenant en compte son état de charge initial et on définit l'objectif de charge pour couvrir le besoin d'utilisation. La détermination de l'objectif de charge est détaillé plus loin.

Pour affecter les batteries, les principes suivants sont respectés :

1. les batteries pleinement chargées sont réservées aux besoins les plus intenses et compatibles, c'est-à-dire avec une autonomie disponible supérieure au besoin, pour ne pas les laisser pleinement chargées;

2. les batteries les plus chargées sont attribuées dans l'ordre des réservations les plus précoces, c'est-à-dire dont l'heure de début de réservation est la plus proche;

3. les batteries usagées sont réservées pour répondre à des usages limités compatibles, tandis que les batteries neuves sont réservées pour répondre à des usages intensifs, en durée et/ou intensité. On prend donc en compte une estimation de la santé de la batterie pour vérifier que la batterie est apte à satisfaire le besoin d'utilisation ;

4. l'ensemble des charges des batteries sont programmées de manière à ce que l'état de charge nécessaire à l'usage coïncide avec l'horaire de début de la réservation. Une marge pourra être prise en considération, tant au niveau de l'état de charge, comme par exemple un niveau d'état de charge cible de 120% du besoin, ou en temps, comme par exemple l'atteinte de l'objectif de charge trente minutes avant le début de la réservation ;

5. une fréquence d'utilisation élevée conduira à augmenter le courant de charge, à moins que l'estimation de l'état de santé soit faible (ex. inférieur à 80%) et/ou l'état de charge est élevé (ex. supérieur à 80%) et/ou la température est faible (ex. inférieure à 5°C).

Ces principes peuvent être enrichis par d'autres règles de charge visant à limiter le vieillissement des batteries et/ou augmenter le taux d'utilisation des batteries.

La figure 3 montre un exemple de planning établi à l'issu de l'étape de planification, dans lequel pour chaque batterie Bat. 1, Bat. 2, Bat. 3 et Bat. N la ligne SOC indique l'état de charge en fonction du temps, la ligne SOH indique l'état de santé, la ligne T indique la température ambiante, et la ligne plan de charge indique si la batterie sera en charge lente ou rapide, en usage ou au repos.

Au cours de la la période planifiée, c'est-à-dire dans l'exemple au cours de la journée, les données acquises par les appareils ou les batteries sont envoyées auprès des moyens d'analyse. Ces données peuvent être transmises en temps réel par télétransmission ou lorsque l'appareil est retourné à sa base et connecté à nouveau aux moyens de charge 2. De même, des réservations nouvelles peuvent être faites. Les moyens d'analyse actualisent le planning en fonction de ces nouvelles informations, en vérifiant en particulier que les batteries prévues pour une réservation suivante sont aptes à être rechargées à temps. La conséquence de l'actualisation peut être la modification de l'instant de début de charge, l'utilisation de la charge rapide à la place de la charge lente ou inversement, ou l'utilisation d'une batterie de réserve si l'utilisation de la charge rapide ne permet pas d'atteindre l'objectif de charge.

En fonction du degré de confiance des prévisions d'usage, paramètre pouvant être calculé de manière automatique sur la base des écarts constatés entre prévisions et réalisations, un nombre de batteries de réserve pleinement chargées plus ou moins important est défini pour faire face à des imprévus. Les batteries de réserve sont sans réservation et on définit un objectif de pleine charge pour celles-ci. Selon l'invention, comme indiqué au point 1 ci-dessus, les batteries de réserve sont échangées périodiquement, à savoir celles de la veille sont utilisées le lendemain de manière à homogénéiser l'impact du vieillissement de l'ensemble de la pluralité de batteries.

On va décrire maintenant un exemple d'une planification à un instant donné le jour j-1 pour la charge de l'ensemble d'une pluralité de batteries le jour j, selon un premier mode de réalisation de l'invention. Dans ce mode de réalisation, l'objectif de charge n'est pas différencié et est de 100% pour chaque réservation.

Les variables utilisées sont :

$t\_réf$ : instant auquel est réalisé le plan de charge de l'ensemble des batteries de la pluralité considérée, exemple donné à minuit pour le jour qui suit ;

$t\_début\_réserv(k)$ : horaire de début de réservation, considérant le jour de réservation connu par ailleurs;

*t_fin_réserv(k)* : horaire de fin de réservation, considérant le jour de réservation connu par ailleurs;

Δ*t_réserv(k) = t_fin_réserv(k) - t_début_réserv(k)* : durée de la réservation *k*, en heures ;

Δ*t_ch_lente_bat(i)_SOC100* : durée de charge lente pour charger à plein *(SOC=100%)* la batterie *i*, en minutes;

Δ*t_ch_rapide_bat(i)_SOC100* : durée de charge rapide pour charger à plein la batterie *i*, en minutes;

*t_bat(i)_SOC100* : horaire auquel la batterie i atteint la pleine charge après une phase de charge planifiée, en minutes par rapport au temps de référence;

*t_bat(i)_SOCcible* : horaire auquel la batterie *i* atteint le niveau de charge cible *SOC_bat(i)_t_début(k)* après une phase de charge planifiée, en minutes par rapport au temps de référence;

*t_deb_ch_lente_bat(ij)* : horaire de début de la charge lente de la batterie *i* attribuée à la réservation *k ;*

*t_deb_ch_rapide_bat(ij)* : horaire de début de la charge rapide de la batterie *i* attribuée à la réservation *k ;*

*t_début_réserv(ji)* : horaire de début de la réservation *k* attribuée à la batterie *i ;*

*t_fin_réserv(ji)* : horaire de fin de la réservation *k* attribuée à la batterie *i ;*

*t_bat(ij)_SOC100* : horaire auquel la batterie *i* attribuée à la réservation *k* atteint un état de pleine charge;

*SOC_bat(i)_t_réf* : état de charge de la batterie i à l'instant *t_réf,* en % ;

*SOC_bat(i)_t_fin(k)* : état de charge de la batterie *i* en fin de réservation *k,* en % ;

*SOH_bat(i)_t_réf* : état de santé de la batterie i à l'instant *t_réf,* en % ;

*DOD_bat(ik)* : profondeur de décharge de la batterie *i* attribuée à la réservation *k*, en % ;

*SOC_bat(i)_t_début(k)* : état de charge cible de la batterie i en début de réservation k, en % ;

*I_ch_lente* : courant de charge en mode charge lente (ou courant moyen équivalent), en A ;

*I_ch_rapide* : courant de charge en mode charge rapide (ou courant moyen équivalent), en A ;

*I_dch_réserv(k)* : courant de décharge moyen associé à la réservation *k*, en A;

*C_init_bat(i)* : capacité initiale de la batterie *i*, à savoir lorsque la batterie est neuve, en Ah ;

*Q_réserv(k)* : capacité requise pour assurer la réservation k, en Ah ;

*Tamb_bat(i)* : température ambiante de la batterie *i,* en °C.

**Étape** 1 : attribution de toutes les réservations possibles à partir de batteries chargées en mode charge lente :

1) Calcul de la durée de charge lente de l'ensemble des batteries à partir de la formule suivante :

$$
\Delta t\_ch\_lente\_bat(i)\_SOC100 = \frac{(1 - SOC\_bat(i)\_t\_réf/100) \times SOH\_bat(i)\_t\_réf/100 \ \times C\_init\_bat(i)}{I\_ch\_lente}
$$

en heure, convertie avantageusement en minutes
2) Calcul du temps à partir duquel chaque batterie rechargée en mode charge lente est pleinement chargée depuis le temps de référence :

$$t\_bat(i)\_SOC100 = t\_réf + \Delta t\_ch\_lente\_bat(i)\_SOC100$$

en minutes à partir de $t\_réf.$

3) Test logique :

$$t\_début\_réserv(k) \geq t\_bat(i)\_SOC100$$

Si oui : on attribue les batteries i à l'ensemble des réservations *k* respectant l'un et l'autre ce critère :

▷ durée de réservation de la plus longue à la plus faible attribuées aux batteries d'état de santé du plus élevé au plus faible, ce qui revient à réserver un usage plus intensif aux batteries moins usagées pour obtenir une homogénéisation du vieillissement;
▷ $t\_début\_réserv(k)$ du plus faible au plus élevé attribués aux batteries ayant une charge $SOC\_bat(i)\_t\_ref$ du plus élevé au plus faible, ce qui revient à réduire le niveau de charge global de la flotte pour limiter le vieillissement calendaire des batteries.

On détermine alors l'instant de démarrage de la charge de chaque batterie :

$$t\_deb\_ch\_lente\_bat(ik) = t\_réf + t\_début\_réserv(ki) - t\_bat(ik)\_SOC100$$

Sinon, on a passe à l'étape 2.
**Étape** 2 : attribution de toutes les réservations restantes possibles à partir de batteries rechargées en mode charge lente à la suite d'un autre usage le jour *j*

1) Calcul de l'état de charge de la batterie i en fin de réservation *k* :

$$DOD\_bat(ik) = \frac{\Delta t\_réservation(k) \times I\_dch\_réserv(k)}{SOH\_bat(i)\_t\_réf/100 \times C\_init\_bat(i)}$$

$$SOC\_bat(i)\_t\_fin(k) = 1 - DOD\_bat(ik)$$

On notera que dans le cas où les batteries sont pleinement chargées avant usage, le niveau de charge de fin d'usage est le même pour les batteries de même état de santé. En revanche, il diffère pour les batteries d'états de santé différents.

2) Calcul de la durée de recharge lente de l'ensemble des batteries à partir de la formule suivante :

$$\Delta t\_ch\_lente\_bat(i)\_SOC100 = \frac{(1 - SOC\_bat(i)\_t\_fin/100) \times SOH\_bat(i)\_t\_réf/100 \times C\_init\_bat(i)}{I\_ch\_lente}$$

en heure, convertie avantageusement en minutes

3) Calcul du temps à partir duquel chaque batterie rechargée en mode charge lente est pleinement chargée depuis le temps de fin de réservation :

$$t\_bat(i)\_SOC100 = t\_fin\_réserv(k) + \Delta t\_ch\_lente\_bat(i)\_SOC100$$

en minutes à partir de t_réf.
4) Test logique :

$$t\_d\acute{e}but\_r\acute{e}serv(k) \geq t\_bat(i)\_SOC100$$

Si oui : on attribue les batteries *i* à l'ensemble des réservations *k* respectant l'un et l'autre ce critère :

▷ durée de réservation de la plus longue à la plus faible attribuées aux batteries d'état de santé du plus élevé au plus faible, ce qui revient à réserver un usage plus intensif aux batteries les moins usagées, d'où une homogénéisation du vieillissement;

▷ *t_début_réserv(k)* du plus faible au plus élevé attribués aux batteries ayant la charge à t_ref *SOC_bat(i)_t_réf* du plus élevé au plus faible, ce qui revient à réduire le niveau de charge global de l'ensemble de batteries et donc du vieillissement calendaire des batteries.

Pour les batteries réservées, on détermine l'instant de début de charge :

$$t\_deb\_ch\_lente\_bat(ik) = t\_r\acute{e}f + t\_d\acute{e}but\_r\acute{e}serv(ki) \text{ - } t\_bat(ik)\_SOC100$$

Pour les batteries qui n'ont pas pu être affectées lors du test précédent, on retient les batteries qui correspondent aux conditions suivantes et on passe à l'étape 3 décrite ci-après :

$SOH\_bat(i)\_t\_ref \geq 80\%$

$Tamb\_bat(i) \geq 5°C$

$SOC\_bat(i)\_t\_ref \leq 80\%$

Les seuils sont indiqués ici uniquement à titre d'exemple. Pour les réservations qui ne répondent pas à l'une de ces conditions, on passe à l'étape 5.

**Étape** 3 : attribution des réservations restantes possibles à partir de batteries chargées en mode charge rapide.

L'étape 3 est similaire à l'étape 1, en remplaçant « Ich_lente » par « Ich_rapide », donc en supposant un courant de charge rapide au lieu d'un courant de charge lente. De plus, l'étape 3 est suivie par l'étape 4 au lieu de l'étape 2.

**Étape** 4 : attribution des réservations restantes possibles à partir de batteries rechargées en mode charge rapide à la suite d'un autre usage le jour j

L'étape 4 est similaire à l'étape 2, en remplaçant « Ich_lente » par « Ich_rapide », donc en supposant un courant de charge rapide au lieu d'un courant de charge lente.

**Etape** 5 : attribution de toutes les réservations restantes à partir de batteries dites de réserve, préalablement laissées pleinement chargées.

Selon un mode de gestion complémentaire, on gère les batteries dites de réserve : une batterie de réserve est pleinement chargée, et utilisée uniquement en dernier recours : soit à l'issue de la phase de planification la veille pour le lendemain, soit en cours de réactualisation du plan de charge au cours du jour j, de nouveau en fin du processus de réactualisation, à savoir dès lors qu'aucune batterie ne peut être rechargée en charge lente ou rapide pour satisfaire à une réservation donnée. Le mode de réalisation ci-après donne un exemple de la gestion des batteries de réserve, à savoir permutées de manière journalière pour éviter tout vieillissement excessif au repos.

Soit *N_tot* le nombre total de batteries de la flotte considérée *N_tot_rés* : nombre de batteries de réserve. On notera que ce nombre peut être attribué de manière arbitraire, ou encore défini à partir de données statistiques d'usage de la flotte, le nombre de batteries de réserve devant permettre de satisfaire les incertitudes de planification.

De manière périodique, exemple tous les jours, *N_tot_rés* batteries sont rechargées pleinement. Les batteries préalablement utilisées en batteries de réserve sont remises à un niveau de charge inférieur, exemple à 50%, et non réutilisées en batteries de réserve avant que la totalité des *N_tot* batteries aient été utilisées en batteries de réserve. En revanche, une batterie de réserve peut être réutilisée en usage normal. La totalité des *N_tot* batteries sont ainsi utilisées en batteries de réserve sur une période de (*N_tot* / *N_tot_rés*) jours.

Dans un deuxième mode de réalisation d'une planification à un instant donné le jour j-1 pour la charge de l'ensemble d'une flotte de batteries le jour j, les batteries sont chargées à la plus juste valeur de charge permettant de satisfaire l'ensemble des réservations.

**Étape** 1. Attribution des batteries *i* de valeurs d'état de santé *SOH_bat(i)_t_réf* des plus élevées au moins élevées aux réservations *k* de valeurs de *Q_réserv(k)* des plus élevées aux moins élevés, de manière à homogénéiser le vieillissement de la flotte. *Q_réserv(k)* est la capacité requise pour assurer la réservation *k*.

**Étape** 2. Pour des batteries *i* de même valeur de *SOH_bat(i)_t_réf* et/ou pour des réservations *k* de même valeur de *Q_réserv(k),* on attribue les batteries *i* de valeurs de charge initiale *SOC_bat(i)_t_réf* des plus élevées au moins élevées aux réservations *k* par ordre chronologique, pour minimiser ainsi l'impact du vieillissement calendaire.

**Étape** 3. Calcul du SOC cible de chaque batterie *i* affectée à une réservation *k*

$$SOC\_bat(i)\_t\_début(k) = 100 \frac{Q\_réserv(k)}{SOH\_bat(i)\_t\_réf/100 \times Cinit}$$

Dans une variante des étapes 2 et 3 : on peut commencer par le calcul de l'étape 3, et remplacer l'étape 2 par : Pour des batteries *i* de même état de santé *SOH_bat(i)_t_réf* et/ou pour des réservations *k* de même valeur de *Q_réserv(k),* on attribue des batteries *i* aux réservations *k* de manière à minimiser globalement l'écart entre la charge cible pour satisfaire une réservation et la charge de départ au moment de faire la planification, à savoir la différence :

$$SOC\_bat(i)\_t\_début(k) - SOC\_bat(i)\_t\_réf$$

On cherche ainsi à minimiser le temps restant à charger ainsi que la consommation globale.

**Étape** 4. Calcul du temps à partir duquel chaque batterie rechargée en mode charge lente est chargée depuis la charge initiale *SOC_bat(i)_t_réf* jusqu'à l'état de charge cible *SOC_bat(i)_t_début(k)* depuis le temps de référence. Si ce temps de charge conduit à atteindre *SOC_bat(i)_t_début(k)* avant ou à l'instant de début de la réservation *t_début_réserv(k),* alors l'attribution et le mode de charge lente sont confirmés, et la charge lente est démarrée au moment

$$t\_deb\_ch\_lente\_bat(ik) = t\_réf + t\_début\_réserv(ki) - t\_bat(i)\_SOCcible$$

Ceci permet de maintenir l'état de charge le plus bas le plus longtemps possible et ainsi minimiser l'impact du vieillissement calendaire.

Sinon, on poursuit avec l'étape 5.

**Étape** 5. Calcul du temps à partir duquel chaque batterie rechargée en mode charge rapide est chargée depuis la charge initiale *SOC_bat(i)_t_réf* jusqu'à la charge cible *SOC_bat(i)_t_début(k)* depuis le temps de référence.

Si cette durée de charge rapide conduit à atteindre la charge *SOC_bat(i)_t_début(k)* avant ou au moment de *t_début_réserv(k),* alors l'attribution et le mode de charge rapide sont confirmés, et la charge rapide est démarrée au moment

$$t\_deb\_ch\_rapide\_bat(ik) = t\_réf + t\_début\_réserv(ki) - t\_bat(i)\_SOCcible$$

Ceci permet de maintenir l'état de charge le plus bas le plus longtemps possible et ainsi minimiser le vieillissement.

Sinon, on passe à l'étape 6.

**Étape** 6. Affectation de la réservation *k* à l'une des batteries de réserve.

En variante possible, dès lors qu'une réservation est précédée par une fin de réservation, tentative pour effectuer une charge lente, et à défaut une charge rapide, pour affecter une batterie i à une réservation k à défaut d'une batterie de réserve.

L'invention n'est pas limitée au mode de réalisation décrit à titre d'exemple :

▷ la température ambiante peut être prise en compte pour ajuster les valeurs d'autonomie disponible de chaque batterie, et modifier par voie de conséquence les différents calculs;

▷ le niveau final de charge peut être différent de 100%, avantageusement ajusté de manière que l'autonomie disponible soit supérieure ou égale à l'autonomie requise pour chaque réservation ;

▷ on peut inclure des phases de décharge additionnelles aux phases de réservation, par exemple liées à un second usage pouvant nécessiter la mutualisation de l'énergie en provenance de l'ensemble ou un sous-ensemble des batteries ;

▷ des grandeurs d'énergie comme des joules ou des watts-heure peuvent se substituer aux valeurs en Ah

▷ des grandeurs de puissance comme des watts peuvent se substituer aux valeurs en ampères.

**Revendications**

1. Procédé de gestion de la charge de batteries (10) d'une pluralité d'appareils (1), selon lequel :

   • on planifie une utilisation d'au moins un appareil (1),
   • on établit en conséquence un objectif de charge pour chaque batterie (10) de la pluralité d'appareils (1),
   • on pilote la charge de chaque batterie en fonction de l'objectif, **caractérisé en ce que**,
   • lors de la planification, on reçoit ou on estime au moins une réservation pour un type d'appareil et pour un besoin d'utilisation,
   • on affecte lors d'une première phase d'affectation une batterie à chaque réservation en vérifiant que la batterie ainsi réservée est apte à satisfaire le besoin d'utilisation en prenant en compte son état de charge initial, et
   • on ajoute aux batteries réservées un nombre prédéterminé de batteries de réserve sans réservation et on définit un objectif de pleine charge pour les batteries de réserve.

2. Procédé selon la revendication 1, selon lequel on définit l'objectif de charge à 100% de la capacité de la batterie.

3. Procédé selon la revendication 1, selon lequel on définit l'objectif de charge pour couvrir a minima le besoin d'utilisation.

4. Procédé selon l'une des revendications 1 à 3, selon lequel, pour vérifier que la batterie est apte à satisfaire le besoin d'utilisation, on prend en compte une estimation de la santé de la batterie.

5. Procédé selon la revendication 1, selon lequel les batteries de réserve sont échangées périodiquement.

6. Procédé selon l'une des revendications 1 à 4, selon lequel on affecte en priorité les batteries pleinement chargées aux besoins les plus intenses.

7. Procédé selon l'une des revendications 1 à 6, selon lequel on affecte les batteries les plus chargées dans l'ordre des réservations les plus précoces.

8. Procédé selon l'une des revendications 1 à 6, selon lequel, pour un lot de réservations ayant le même besoin, ou pour un lot de batteries ayant le même état de santé, on affecte les batteries de manière à minimiser globalement l'écart entre la charge cible pour satisfaire une réservation et la charge initiale de la batterie.

9. Procédé selon l'une des revendications 4 à 8, selon lequel on affecte en priorité les batteries en moins bonne santé aux besoins les plus faibles.

10. Procédé selon l'une des revendications 1 à 9, selon lequel, pour les batteries réservées, on fait coïncider l'instant d'atteinte de la charge selon l'objectif à l'instant de début de la réservation.

11. Procédé selon l'une des revendications 1 à 10, selon lequel on pilote les batteries réservées pour qu'elles fournissent du courant à un consommateur afin d'atteindre l'objectif de charge desdites batteries.

12. Procédé selon l'une des revendications 1 à 11, selon lequel, pour vérifier que la batterie est apte à satisfaire le besoin d'utilisation, on prend en compte une température ambiante prédite pendant la période de la réservation.

13. Procédé selon l'une des revendications 1 à 12, selon lequel pour vérifier que la batterie est apte à satisfaire le besoin d'utilisation on estime une durée de charge avec un courant de charge lente, puis on procède à une deuxième phase d'affectation d'une batterie à chaque réservation non satisfaite lors de la première phase d'affectation en estimant une durée de charge avec un courant de charge rapide supérieur au courant de charge lente.

14. Système de gestion de la charge de batteries (10) d'une pluralité d'appareils (1), comportant :

• des moyens de planification (4) pour planifier une utilisation d'au moins un appareil (1),
• des moyens d'analyse (5) pour établir un objectif de charge pour chaque batterie (10) de la pluralité d'appareils (1),
• des moyens de régulation (3) pour piloter la charge de chaque batterie (10) en fonction de l'objectif, **caractérisé en ce que**,
• les moyens de planification (4) sont configurés pour recevoir ou estimer au moins une réservation pour un type d'appareil et pour un besoin d'utilisation, pour affecter une batterie (10) à chaque réservation en vérifiant que la batterie est apte à satisfaire le besoin d'utilisation et pour ajouter aux batteries réservées un nombre prédéterminé de batteries de réserve sans réservation, et
• les moyens d'analyse (5) sont configurés pour définir l'objectif de charge pour couvrir le besoin d'utilisation, un objectif de pleine charge étant défini pour les batteries de réserve.

15. Système selon la revendication 14, **caractérisé en ce qu'**il comporte des moyens d'acquisition pour enregistrer et fournir pour chaque batterie au moins l'un des paramètres parmi le courant de charge ou de décharge, la tension, la température, l'état de charge, l'état de santé.

16. Système selon la revendication 14 ou 15, **caractérisé en ce qu'**il comporte au moins un consommateur et dans lequel les moyens de régulation (3) sont aptes à commander la décharge de la batterie en alimentant le consommateur.

## Patentansprüche

1. Verwaltungsverfahren der Ladung von Batterien (10) aus einer Vielzahl von Geräten (1), gemäß dem:

• eine Verwendung wenigstens eines Geräts (1) geplant wird,
• infolgedessen ein Ladungsziel für jede Batterie (10) der Vielzahl von Geräten (1) festgelegt wird,
• die Ladung jeder Batterie in Abhängigkeit des Ziels gesteuert wird, **dadurch gekennzeichnet, dass**
• bei der Planung wenigstens eine Reservierung für einen Gerätetyp und für einen Nutzungsbedarf empfangen oder geschätzt wird,
• bei einer ersten Zuordnungsphase jeder Reservierung eine Batterie zugeordnet wird, wobei überprüft wird, dass die auf diese Weise reservierte Batterie geeignet ist, den Nutzungsbedarf unter Berücksichtigung ihres ursprünglichen Ladezustandes zu befriedigen und
• zu den reservierten Batterien eine vorbestimmte Anzahl von Reservebatterien ohne Reservierung hinzugefügt wird und ein Vollladungsziel für die Reservebatterien definiert wird.

2. Verfahren gemäß Anspruch 1, gemäß dem das Ladungsziel zu 100 % der Kapazität der Batterie definiert wird.

3. Verfahren gemäß Anspruch 1, gemäß dem das Ladungsziel zum Abdecken a minima des Nutzungsbedarfs definiert wird.

4. Verfahren gemäß einem der Ansprüche 1 bis 3, gemäß dem eine Schätzung der Gesundheit der Batterie zur Überprüfung, dass die Batterie geeignet ist, den Nutzungsbedarf zu befriedigen, berücksichtigt wird.

5. Verfahren gemäß Anspruch 1, gemäß dem die Reservebatterien periodisch ausgetauscht werden.

6. Verfahren gemäß einem der Ansprüche 1 bis 4, gemäß dem vorrangig die vollständig aufgeladenen Batterien dem jeweils intensivsten Bedarf zugeordnet werden.

7. Verfahren gemäß einem der Ansprüche 1 bis 6, gemäß dem die am stärksten aufgeladenen Batterien in der Reihenfolge der frühesten Reservierungen zugeordnet werden.

8. Verfahren gemäß einem der Ansprüche 1 bis 6, gemäß dem bei einem Reservierungslos mit demselben Bedarf oder bei einem Batterienlos mit demselben Gesundheitszustand die Batterien derart zugeordnet werden, dass insgesamt die Abweichung zwischen der Zielladung zum Befriedigen einer Reservierung und der anfänglichen Ladung der Batterie minimiert wird.

9. Verfahren gemäß einem der Ansprüche 4 bis 8, gemäß dem die Batterien mit der weniger guten Gesundheit dem geringsten Bedarf zugeordnet werden.

10. Verfahren gemäß einem der Ansprüche 1 bis 9, gemäß dem bei den reservierten Batterien der Moment des Erreichens der Ladung gemäß dem Ziel mit dem Anfangsmoment der Reservierung zum Zusammenfallen gebracht wird.

11. Verfahren gemäß einem der Ansprüche 1 bis 10, gemäß dem die reservierten Batterien gesteuert werden, damit sie einem Verbraucher Strom liefern, um das Ladungsziel der genannten Batterien zu erreichen.

12. Verfahren gemäß einem der Ansprüche 1 bis 11, gemäß dem eine während des Zeitraums der Reservierung vorausgesagte Raumtemperatur berücksichtigt wird, um zu überprüfen, dass die Batterie geeignet ist, den Nutzungsbedarf zu befriedigen.

13. Verfahren gemäß einem der Ansprüche 1 bis 12, gemäß dem eine Ladungsdauer mit einem langsamen Ladestrom geschätzt wird, um zu überprüfen, dass die Batterie geeignet ist, den Nutzungsbedarf zu befriedigen, dann eine zweite Zuordnungsphase einer Batterie zu jeder Reservierung, die in der ersten Zuordnungsphase nicht befriedigt wurde, durch Schätzen einer Ladungsdauer mit einem schnellen Ladungsstrom durchgeführt wird, der höher ist als der langsame Ladungsstrom.

14. Verwaltungssystem der Ladung der Batterien (10) einer Vielzahl von Geräten (1), umfassen:

    • Planungsmittel (4) zum Planen einer Nutzung wenigstens eines Geräts (1),
    • Analysemittel (5) zum Erstellen eines Ladungsziels für jede Batterie (10) der Vielzahl (1) von Geräten,
    • Regulierungsmittel (3) zum Steuern der Ladung der Batterie (10) in Abhängigkeit des Ziels,
    **dadurch gekennzeichnet, dass**
    • die Planungsmittel (4) ausgestaltet sind, um wenigstens eine Reservierung für einen Gerätetyp und für einen Nutzungsbedarf zu empfangen oder zu schätzen, um jeder Reservierung eine Batterie (10) unter der Überprüfung zuzuordnen, dass die Batterie geeignet ist, den Nutzungsbedarf zu befriedigen, und um den reservierten Batterien eine vorbestimmte Anzahl von Reservebatterien ohne Reservierung hinzuzufügen, und
    • die Analysemittel (5) ausgestaltet sind, um das Ladungsziel zum Decken des Nutzungsbedarfs zu definieren, wobei ein Vollladungsziel für die Reservebatterien definiert wird.

15. System gemäß Anspruch 14, **dadurch gekennzeichnet, dass** es Erwerbsmittel zum Speichern und Lieferung wenigstens eines der Parameter aus dem Lade- oder Entladestrom, die Spannung, die Temperatur, den Ladezustand, den Gesundheitszustand für jede Batterie zu speichern und zu liefern.

16. System gemäß Anspruch 14 oder 15, **dadurch gekennzeichnet, dass** es wenigstens einen Verbraucher umfasst und in dem die Regulierungsmittel (3) geeignet sind, das Entladen der Batterie durch Versorgen des Verbrauchers zu steuern.

**Claims**

1. Method for managing the charging of batteries (10) of a plurality of devices (1), according to which:

    • a usage of at least one device (1) is scheduled,
    • a charging objective for each battery (10) of the plurality of devices (1) is consequently established,
    • the charging of each battery is managed according to the objective, **characterised in that**,
    • during the scheduling, at least one reservation for a type of device and for a need for use is received or estimated,
    • during a first allocation phase a battery is allocated to each reservation by checking that the battery thus reserved is able to satisfy the need for use by taking its initial state of charge into account, and
    • a predetermined number of reserve batteries without reservation is added to the reserved batteries and a full charge objective is defined for the reserve batteries.

2. Method according to claim 1, according to which the charge objective is defined to 100% of the capacity of the battery.

3. Method according to claim 1, according to which the charge objective is defined to cover at least the need for use.

4. Method according to one of claims 1 to 3, according to which, in order to check that the battery is able to satisfy the need for use, an estimation of the health of the battery is taken into account.

5. Method according to claim 1, according to which the reserve batteries are exchanged periodically.

6. Method according to one of claims 1 to 4, according to which the fully charged batteries are allocated with priority to the most intensive needs.

7. Method according to one of claims 1 to 6, according to which the most charged batteries are allocated in the order of the earliest reservations.

8. Method according to one of claims 1 to 6, according to which, for a batch of reservations that have the same need, or for a batch of batteries that have the state of health, the batteries are allocated in such a way as to globally minimise the difference between the target charge in order to satisfy a reservation and the initial charge of the battery.

9. Method according to one of claims 4 to 8, according to which the batteries with a lower state of health are allocated with priority to the lowest needs.

10. Method according to one of claims 1 to 9, according to which, for the reserved batteries, the instant of reaching the charge according to the objective is made to coincide with the instant of the beginning of the reservation.

11. Method according to one of claims 1 to 10, according to which the reserved batteries are managed so that they supply current to a consumer so as to reach the charge objective of said batteries.

12. Method according to one of claims 1 to 11, according to which, in order to check that the battery is able to satisfy the need for use, a predicted ambient temperature during the reservation period is taken into account.

13. Method according to one of claims 1 to 12, according to which, in order to check that the battery is able to satisfy the need for use, a charge duration with a slow charge current is estimated, then a second allocation phase of a battery to each reservation that was not satisfied during the first allocation phase is carried out by estimating a charge duration with a fast charge current that is higher than the slow charge current.

14. System for managing the charging of batteries (10) of a plurality of devices (1), comprising:

     ◦ scheduling means (4) for scheduling a use of at least one device (1),
     ◦ analysis means (5) for establishing a charge objective for each battery (10) of the plurality of devices (1),
     ◦ regulation means (3) for controlling the charge of each battery (10) according to the objective,
     **characterised in that**,
     ◦ the scheduling means (4) are configured to receive or estimate at least one reservation for a type of device and for a need for use, to allocate a battery (10) to each reservation by checking that the battery is able to satisfy the need for use and to add a predetermined number of reserve batteries without reservation to the reserved batteries, and
     ◦ the analysis means (5) are configured to define the charge objective to cover the need for use, with a full charge objective being defined for the reserve batteries.

15. System according to claim 14, **characterised in that** it comprises acquisition means for recording and supplying for each battery at least one of the parameters among the charge or discharge current, the voltage, the temperature, the state of charge, the state of health.

16. System according to claim 14 or 15, **characterised in that** it comprises at least one consumer and wherein the regulation means (3) are able to control the discharge of the battery by supplying the consumer.

Fig. 1

Fig. 2

Fig. 3

EP 3 508 372 B1

Planning global

| 00h | 02h | 04h | 06h | 08h | 10h | 12h | 14h | 16h | 18h | 20h | 22h | 00h | 02h | 04h |

Mardi | Mercredi

**Bat. 1**

| 30% | 50% | 100% | 75% | 35% | 100% | 75% | 40% | SOC |
| 97% | | | | | | | | SOH |
| 5°C | | 10°C | 15°C | 20°C | | 15°C | 10°C | 5°C | T (°C) |
| Repos | Charge lente | Usage | | | Charge rapide | Usage | | Repos | Plan de charge |

**Bat. 2**

| 100% | 75% | 35% | 100% | 85% | 55% | SOC |
| 99% | | | | | | SOH |
| 5°C | 10°C | 15°C | 20°C | | 15°C | 10°C | 5°C | T (°C) |
| Repos | Usage | | Charge rapide | Usage | | Repos | Plan de charge |

**Bat. 3**

| 30% | 50% | 100% | 75% | 35% | SOC |
| 78% | | | | | SOH |
| 5°C | 10°C | 15°C | 20°C | 15°C | 10°C | 5°C | T (°C) |
| Repos | Charge lente | Usage | Repos | Plan de charge |

**Bat. N**

| 50% | 50% | 75% | 100% | 75% | 50% | SOC |
| 88% | | | | | | SOH |
| 5°C | 10°C | 15°C | 20°C | 15°C | 10°C | 5°C | T (°C) |
| Repos | Charge lente | Usage | Repos | Plan de charge |

t

**RÉFÉRENCES CITÉES DANS LA DESCRIPTION**

**Documents brevets cités dans la description**

- US 20040066171 A1